# EUROPEAN PATENT APPLICATION

(11) **EP 4 610 436 A1**
(43) Date of publication of application: **03.09.2025**
(21) Application number: 23882251.4
(22) Date of filing: 04.09.2023
(51) Int. Cl.: E02F 9/00, B60L 50/60, B60L 58/26

(54) **HYDRAULIC SYSTEM FOR CONSTRUCTION MACHINE**

(30) Priority: 28.10.2022 JP 2022172897
(71) Applicant: KAWASAKI JUKOGYO KABUSHIKI KAISHA, Kobe-shi, Hyogo 650-8670 (JP)
(72) Inventor: NAKAMURA, Takanobu, Hyogo 650-8670 (JP); IMAMURA, Yukito, Hyogo 650-8670 (JP); TANAKA, Hideki, Hyogo 650-8670 (JP); HIGUCHI, Atsuhito, Hyogo 650-8670 (JP); KANO, Kenta, Hyogo 650-8670 (JP)
(74) Representative: Dehns
(86) International application number: PCT/JP2023/032248
(87) International publication number: WO 2024/090038

(57) **Abstract**

A hydraulic system (2) of a construction machine according to one embodiment includes: an electric motor (21) that is supplied with electric power from a battery (13); a hydraulic pump (33) that is driven by the electric motor (21); and a circulation pump (71) that circulates cooling water through a circulation passage (7) that extends through the battery (13) and a radiator (76). The hydraulic system (2) further includes: a heat exchanger (24) that is connected to the circulation passage (7) in parallel with the radiator (76); a first switching valve (52) that switches whether or not to supply hydraulic oil that has been delivered from the hydraulic pump (33) to the heat exchanger (24); and a second switching valve (74) that switches whether to supply the cooling water that has passed through the battery (13) to the radiator (76) or to the heat exchanger (24).

## Description

### Technical Field

The present disclosure relates to a hydraulic system of a construction machine.

### Background Art

In construction machines such as a hydraulic excavator, a hydraulic system in which hydraulic oil is supplied from a hydraulic pump to hydraulic actuators is installed. For example, Patent Literature 1 discloses a hydraulic system of a construction machine, the hydraulic system including a hydraulic pump driven by an engine.

### Citation List

### Patent Literature

PTL 1: Japanese Patent No. 4909164

### Summary of Invention

### Technical Problem

In recent years, there is ongoing development of a hydraulic system of a construction machine in which an electric motor is adopted instead of an engine. In this case, electric power is supplied from a battery to the electric motor. However, in cold climates, the performance of the battery deteriorates significantly.

In view of the above, an object of the present disclosure is to provide a hydraulic system of a construction machine, the hydraulic system being capable of increasing the temperature of a battery.

### Solution to Problem

The present disclosure provides a hydraulic system of a construction machine, the hydraulic system including: an electric motor that is supplied with electric power from a battery; a hydraulic pump that is driven by the electric motor; a circulation pump that circulates cooling water through a circulation passage that extends through the battery and a radiator; a heat exchanger that is connected to the circulation passage in parallel with the radiator and that performs heat exchange between the cooling water and hydraulic oil; a first switching valve that switches whether or not to supply the hydraulic oil that has been delivered from the hydraulic pump to the heat exchanger; and a second switching valve that switches whether to supply the cooling water that has passed through the battery to the radiator or to the heat exchanger.

### Advantageous Effects of Invention

The present disclosure provides a hydraulic system of a construction machine, the hydraulic system being capable of increasing the temperature of a battery.

### Brief Description of Drawings

FIG. 1 shows a schematic configuration of a hydraulic system of a construction machine according to one embodiment.
FIG. 2 is a plan view showing an internal configuration of a slewing structure of a hydraulic excavator in which the hydraulic system is installed.
FIG. 3 is a side view showing an internal configuration of the slewing structure of the hydraulic excavator.
FIG. 4 is a plan view taken along line IV-IV of FIG. 3.
FIG. 5 shows a schematic configuration of a variation of the hydraulic system of the construction machine.

### Description of Embodiments

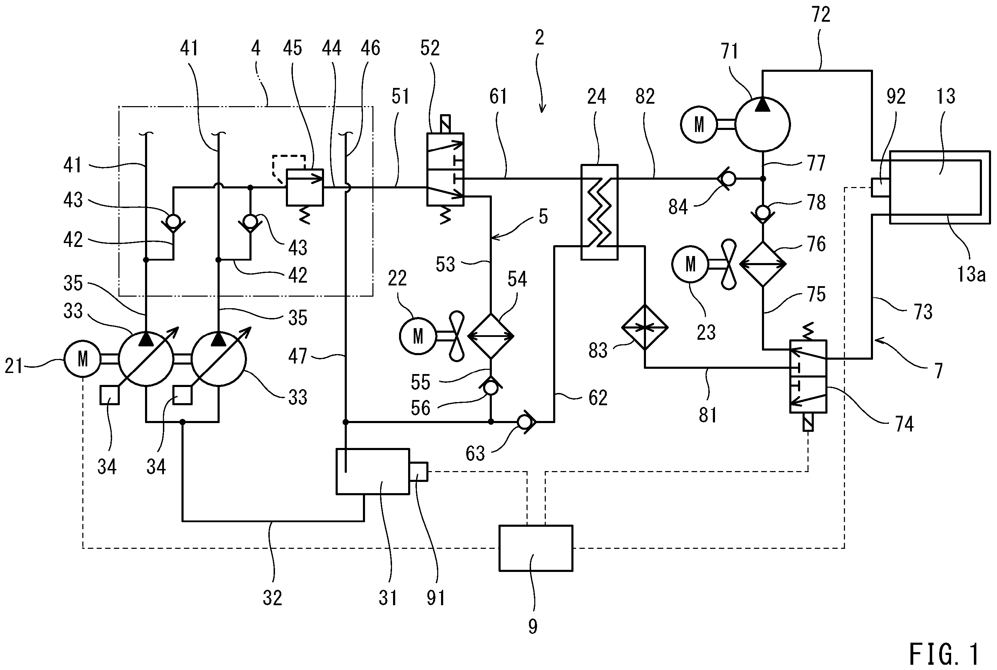

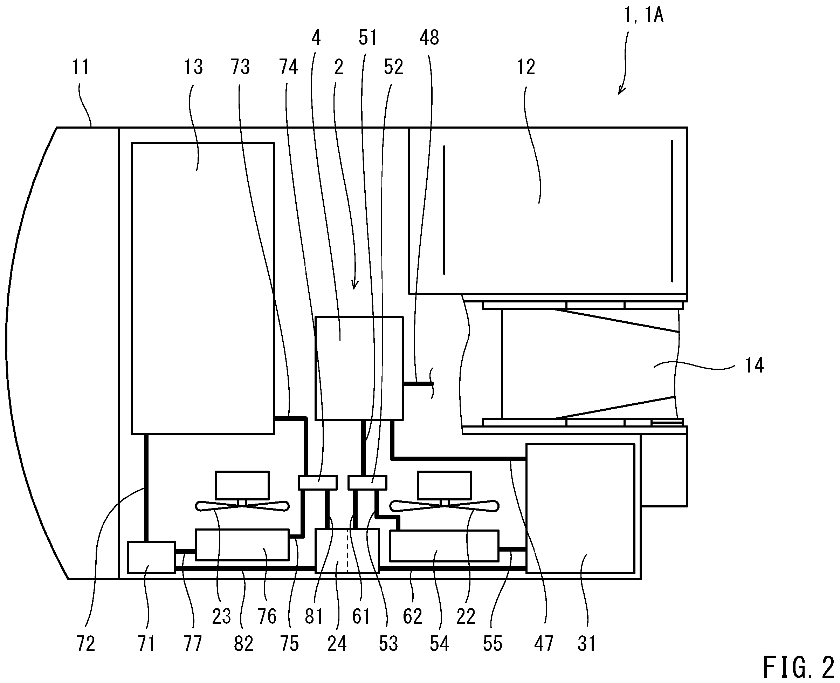

FIG. 1 shows a hydraulic system 2 of a construction machine according to one embodiment. The hydraulic system 2 is installed in a construction machine 1 as shown in FIG. 2. In the present embodiment, the construction machine 1 is a hydraulic excavator 1A. However, the construction machine 1, in which the hydraulic system 2 is installed, is not limited to a hydraulic excavator, but may be a different construction machine, such as a crane or a wheel loader.

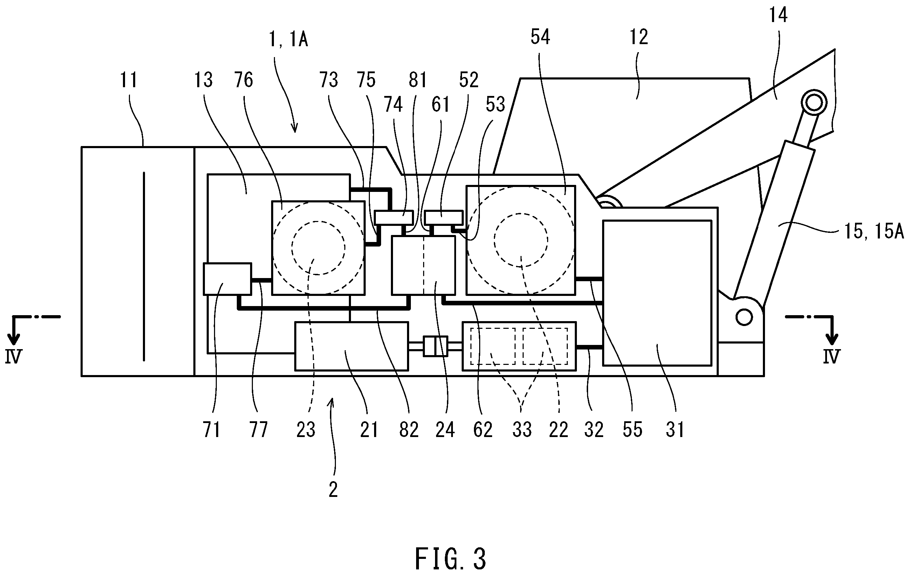

As shown in FIG. 2 and FIG. 3, the hydraulic excavator 1A includes: a slewing structure 11; and a boom 14, which is luffed relative to the slewing structure 11. In a case where the hydraulic excavator 1A is of a self-propelled type, the slewing structure 11 is slewably supported by a traveling structure. The slewing structure 11 includes a driver's seat 12, which is located laterally to the boom 14.

As shown in FIG. 1, in the hydraulic system 2, hydraulic oil is supplied from at least one hydraulic pump 33 to hydraulic actuators 15 shown in FIG. 3. FIG. 3 shows only one of the hydraulic actuators 15, specifically a boom cylinder 15A. Examples of the hydraulic actuators other than the boom cylinder 15A include a slewing motor, an arm cylinder, and a bucket cylinder.

Specifically, the hydraulic system 2 includes: a hydraulic oil tank 31, which stores the hydraulic oil; the at least one hydraulic pump 33 connected to the hydraulic oil tank 31 by hydraulic piping 32; an electric motor 21, which drives the at least one hydraulic pump 33; a control valve structure 4, which is connected to the at least one hydraulic pump 33 by hydraulic oil piping 35 and connected to the hydraulic oil tank 31 by hydraulic oil piping 47. In FIG. 3, a pump structure including the hydraulic pumps 33 and the electric motor 21 is installed in a horizontal orientation. Alternatively, the pump structure may be installed in a vertical orientation.

In the present embodiment, the hydraulic system 2 includes two hydraulic pumps 33. Alternatively, the number of hydraulic pumps 33 included in the hydraulic system 2 may be one, three, or more. In the present embodiment, each hydraulic pump 33 is a variable displacement pump, and the displacement of each hydraulic pump 33 is changed by a corresponding regulator 34. For example, each hydraulic pump 33 is a swash plate pump or a bent axis pump, each of which is an axial piston pump.

In the present embodiment, as shown in FIG. 3, the two hydraulic pumps 33 are located coaxially with each other to form a tandem pump. The rotating shaft of the tandem pump is coupled to the output shaft of the electric motor 21 by a coupling. Alternatively, the two hydraulic pumps 33 may be located side by side to form a parallel pump.

Returning to FIG. 1, in the present embodiment, each regulator 34 is controlled by control circuitry 9. In FIG. 1, the illustration of part of signal lines is omitted for the purpose of simplifying the drawing. For example, assume a case where each hydraulic pump 33 is a swash plate pump. In this case, each regulator 34 may electrically change a hydraulic pressure applied to a servo piston coupled to the swash plate of the corresponding hydraulic pump 33, or may be an electric actuator coupled to the swash plate of the corresponding hydraulic pump 33.

Each regulator 34 need not be controlled by the control circuitry 9, but may be moved by the pressure of the hydraulic oil. For example, each regulator 34 may be controlled by negative control, or may be controlled by load-sensing control. Alternatively, each hydraulic pump 33 may be a fixed displacement pump, and the delivery flow rate of each hydraulic pump 33 may be changed by its rotation speed.

The driver's seat 12 is equipped with multiple operators, such as a boom operator, an arm operator, and a bucket operator. In the present embodiment, the electric motor 21 drives each hydraulic pump 33 at a constant rotation speed. When none of the operators is operated, the control circuitry 9 keeps the displacement of each hydraulic pump 33 to a minimum. On the other hand, when any one of the operators is operated, in accordance with an increase in the operating amount of the operator, the control circuitry 9 increases the displacement of the hydraulic pump 33 that supplies the hydraulic oil to the hydraulic actuator 15 corresponding to the operated operator.

The hydraulic oil tank 31 is located inside the slewing structure 11. The hydraulic oil tank 31 is located on the opposite side of the boom 14 from the driver's seat 12. A battery 13 is also located inside the slewing structure 11. The battery 13 is located at the back of the driver's seat 12 and the boom 14. The electric motor 21 is supplied with electric power from the battery 13.

When any of the aforementioned operators is operated, the control valve structure 4 supplies the hydraulic oil delivered from the hydraulic pump 33 to the hydraulic actuator 15 corresponding to the operated operator, and returns the hydraulic oil discharged from the hydraulic actuator 15 to the hydraulic oil tank 31.

Specifically, the control valve structure 4 includes control valves corresponding to the respective hydraulic actuators 15. The control valve structure 4 includes: two pump passages 41, each of which communicates with the corresponding hydraulic oil piping 35; and a tank passage 46, which communicates with the hydraulic oil piping 47. Each control valve is connected to one of the pump passages 41 and to the tank passage 46. The control valve structure 4 includes pairs of supply/discharge passages, each pair for a corresponding one of the control valves. The control valve structure 4 is connected to the hydraulic actuators 15 by hydraulic oil piping 48 shown in FIG. 2, which communicates with the supply/discharge passages. The control valve structure 4 is, inside the slewing structure 11, located between the boom 14 and the battery 13.

Further, as shown in FIG. 1, the control valve structure 4 includes: a relief passage 44, on which a relief valve 45 is located; and relay passages 42, which connect the respective pump passages 41 to the relief passage 44. Check valves 43 are located on the respective relay passages 42. Each check valve 43 allows a flow from the corresponding pump passage 41 to the relief passage 44, but prevents a flow from the relief passage 44 to the corresponding pump passage 41.

The control valve structure 4 is connected to a first switching valve 52 by hydraulic oil piping 51. The above-described relief passage 44 communicates with the hydraulic oil piping 51. That is, the relief valve 45 is located between the first switching valve 52 and the hydraulic pumps 33.

The first switching valve 52 is connected to an oil cooler 54 by hydraulic oil piping 53, and the oil cooler 54 is connected to the hydraulic oil tank 31 by hydraulic oil piping 55. A check valve 56 is located on the hydraulic oil piping 55. The check valve 56 allows a flow from the oil cooler 54 to the hydraulic oil tank 31, but prevents a flow from the hydraulic oil tank 31 to the oil cooler 54. In FIG. 2 and FIG. 3, the illustration of the check valve 56 is omitted.

The oil cooler 54 cools the hydraulic oil that has been delivered from each hydraulic pump 33 and that has passed through the relief valve 45. That is, the hydraulic oil piping 51, 53, 55, the first switching valve 52, and the oil cooler 54 form a cooling passage 5. In the present embodiment, the oil cooler 54 is of an air-cooling type that is fed with air from a fan motor 22. Alternatively, the oil cooler 54 may be of a water-cooling type.

A heat exchanger 24 is connected to the cooling passage 5 in parallel with the oil cooler 54. The heat exchanger 24 performs heat exchange between the hydraulic oil and cooling water. To be more specific, the heat exchanger 24 is connected to the first switching valve 52 by hydraulic oil piping 61, and is connected to the hydraulic oil tank 31 by hydraulic oil piping 62. A check valve 63 is located on the hydraulic oil piping 62. The check valve 63 allows a flow from the heat exchanger 24 to the hydraulic oil tank 31, but prevents a flow from the hydraulic oil tank 31 to the heat exchanger 24. In FIG. 2 and FIG. 3, the illustration of the check valve 63 is omitted.

The first switching valve 52 is switched between a cooling position and a non-cooling position. When the first switching valve 52 is in the cooling position, the first switching valve 52 allows the hydraulic oil piping 51 to communicate with the hydraulic oil piping 53, whereas when the first switching valve 52 is in the non-cooling position, the first switching valve 52 allows the hydraulic oil piping 51 to communicate with the hydraulic oil piping 61. That is, the first switching valve 52 switches whether to supply the hydraulic oil that has passed through the relief valve 45 to the heat exchanger 24 or to the oil cooler 54. In other words, the first switching valve 52 switches whether or not to supply the hydraulic oil that has been delivered from each hydraulic pump 33 to the heat exchanger 24. The first switching valve 52 is controlled by the control circuitry 9.

The present embodiment further adopts a configuration for cooling the battery 13. Specifically, the hydraulic system 2 includes: a radiator 76; and a circulation pump 71, which circulates cooling water through a circulation passage 7, which extends through the battery 13 and the radiator 76. In the present embodiment, the radiator 76 is of an air-cooling type that is fed with air from a fan motor 23. Alternatively, the radiator 76 may be of a water-cooling type.

The circulation pump 71 is connected to the battery 13 by cooling water piping 72. The battery 13 is connected to a second switching valve 74 by cooling water piping 73. The battery 13 includes an internal passage 13a, and the internal passage 13a communicates with the cooling water piping 72 and 73. Alternatively, a jacket may be adopted instead of the internal passage 13a. A cooling water tank may be located on the circulation passage 7 (e.g., on cooling water piping 77, which is located upstream of the circulation pump 71; the cooling water piping 77 will be described below).

The second switching valve 74 is connected to the radiator 76 by cooling water piping 75, and the radiator 76 is connected to the circulation pump 71 by the cooling water piping 77. A check valve 78 is located on the cooling water piping 77. The check valve 78 allows a flow from the radiator 76 to the circulation pump 71, but prevents a flow from the circulation pump 71 to the radiator 76. In FIG. 2 and FIG. 3, the illustration of the check valve 78 is omitted.

The heat exchanger 24 is connected to the circulation passage 7 in parallel with the radiator 76. To be more specific, the heat exchanger 24 is connected by cooling water piping 81 to the second switching valve 74, and connected by cooling water piping 82 to the cooling water piping 77 at a position that is downstream of the check valve 78.

In the present embodiment, a heater 83 is located on the cooling water piping 81. However, the heater 83 may be eliminated. A check valve 84 is located on the cooling water piping 82. The check valve 84 allows a flow from the heat exchanger 24 to the cooling water piping 77, and prevents a flow from the cooling water piping 77 to the heat exchanger 24. In FIG. 2 and FIG. 3, the illustration of the check valve 84 is omitted.

The second switching valve 74 is switched between a cooling position and a heating position. When the second switching valve 74 is in the cooling position, the second switching valve 74 allows the cooling water piping 73 to communicate with the cooling water piping 75, whereas when the second switching valve 74 is in the heating position, the second switching valve 74 allows the cooling water piping 73 to communicate with the cooling water piping 81. That is, the second switching valve 74 switches whether to supply the cooling water that has passed through the battery 13 to the radiator 76 or to the heat exchanger 24. The second switching valve 74 is controlled by the control circuitry 9.

Regarding the control circuitry 9, the functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The control circuitry 9 is electrically connected to a temperature sensor 91 located on the hydraulic oil tank 31 and to a temperature sensor 92 located on the battery 13. The temperature sensor 91 detects the temperature of the hydraulic oil stored in the hydraulic oil tank 31, and the temperature sensor 92 detects the temperature of the battery 13. Alternatively, the temperature sensor 91 may be located on any of the hydraulic oil piping, and the temperature sensor 92 may be located on any of the cooling water piping.

The driver's seat 12 is equipped with a display. The control circuitry 9 displays, on the display, the temperature of the hydraulic oil detected by the temperature sensor 91. When the temperature of the hydraulic oil is low, the driver performs warm-up operation to reduce the viscosity of the hydraulic oil. When the temperature of the hydraulic oil detected by the temperature sensor 91 is lower than a predetermined value α, the control circuitry 9 switches the first switching valve 52 to the non-cooling position, whereas when the temperature of the hydraulic oil detected by the temperature sensor 91 is higher than the predetermined value α, the control circuitry 9 switches the first switching valve 52 to the cooling position. For example, the predetermined value α is a value within the range of 10°C to 40°C.

For example, the driver tilts an operating lever of the boom operator to the utmost degree to retract the boom cylinder 15A to a stroke end, and thereafter maintains the tilted state of the operating lever. Accordingly, the hydraulic oil delivered from the corresponding hydraulic pump 33 at the maximum flow rate passes through the relief valve 45, and thereby heat is generated.

When the temperature of the battery 13 detected by the temperature sensor 92 is higher than a predetermined value β, the control circuitry 9 switches the second switching valve 74 to the cooling position, whereas when the temperature of the battery 13 detected by the temperature sensor 92 is lower than the predetermined value β, the control circuitry 9 switches the second switching valve 74 to the heating position. For example, the predetermined value β is a value within the range of 10°C to 40°C.

As described above, in the hydraulic system 2 of the present embodiment, when the hydraulic oil that has been delivered from each hydraulic pump 33 and that has passed through the relief valve 45 is supplied to the heat exchanger 24 by the first switching valve 52, and the cooling water that has passed through the battery 13 is supplied to the heat exchanger 24 by the second switching valve 74, the cooling water that circulates in a manner to flow through the battery 13 is heated by the hydraulic oil. Therefore, the temperature of the battery 13 can be increased.

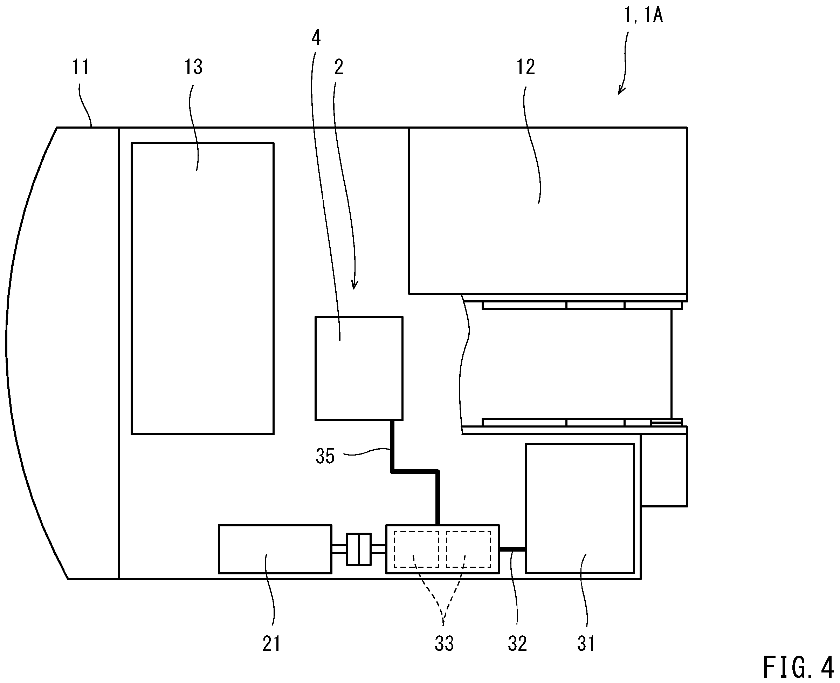

Moreover, in the present embodiment, as shown in FIG. 2 to FIG. 4, the electric motor 21, the hydraulic pumps 33, the oil cooler 54, the first switching valve 52, the heat exchanger 24, the circulation pump 71, the radiator 76, and the second switching valve 74 are located within a space that is surrounded by a side surface 11a of the slewing structure 11, the side surface 11a being located on the side of the hydraulic oil tank 31, the battery 13, the control valve structure 4, and the hydraulic oil tank 31. Therefore, the hydraulic oil piping and the cooling water piping can be laid out with short lengths.

### <Variations>

The present disclosure is not limited to the above-described embodiment. Various modifications can be made without departing from the scope of the present disclosure.

For example, the warm-up operation need not be performed by the driver, but may be automatically performed by the control circuitry 9 when the construction machine 1 is powered on. In this case, heating operation to heat the battery 13 may be performed immediately after the temperature of the hydraulic oil has been increased by the warm-up operation to be higher than the predetermined value α.

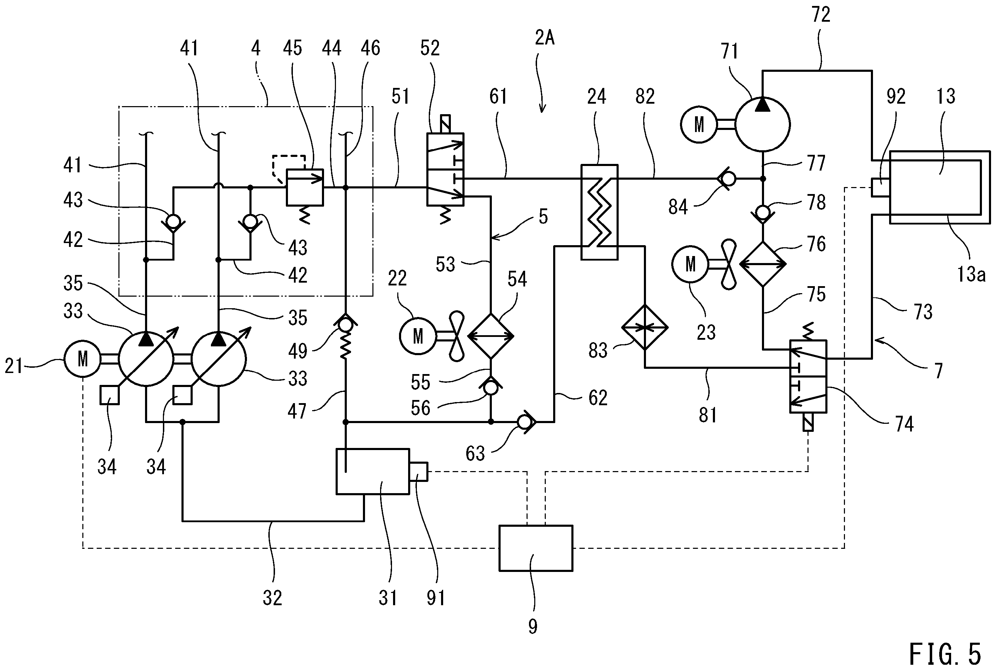

As in a hydraulic system 2A, which is a variation shown in FIG. 5, a check valve 49 whose cracking pressure is set slightly high may be located on the hydraulic oil piping 47, and the tank passage 46 may communicate with the relief passage 44 at a position downstream of the relief valve 45. In this case, the oil cooler 54 cools the hydraulic oil that is discharged from the hydraulic actuators 15 through the control valve structure 4. With this configuration, not only the hydraulic oil that has passed through the relief valve 45, but also the hydraulic oil that is discharged from the hydraulic actuators 15 can be cooled. The hydraulic oil that is returned from the hydraulic actuators 15 and the hydraulic oil that has passed through the relief valve 45 basically flow in a manner to pass through the oil cooler 54. However, the hydraulic oil that is returned from the hydraulic actuators 15 and the hydraulic oil that has passed through the relief valve 45 flow through the hydraulic oil piping 47 in a case where the pressure of the hydraulic oil has increased due to a trouble of the oil cooler 54 or due to returning of a large amount of hydraulic oil.

The relief passage 44 and the oil cooler 54 may be in direct communication with each other by the hydraulic oil piping 53; the first switching valve 52 may be configured as a simple on-off valve; the control valve structure 4 may include branch passages that are branched off from the pump passages 41; and the hydraulic oil piping 51 extending from the first switching valve 52 may be in communication with the branch passages.

However, by adopting the configuration described in the above embodiment, when the hydraulic oil passes through the relief valve 45, the temperature of the hydraulic oil can be increased. In addition, if heating of the cooling water is unnecessary, the hydraulic oil that has passed through the relief valve 45 can be cooled by the oil cooler 54.

### <Summary>

The present disclosure provides, as a first mode, a hydraulic system of a construction machine, the hydraulic system including: an electric motor that is supplied with electric power from a battery; a hydraulic pump that is driven by the electric motor; a circulation pump that circulates cooling water through a circulation passage that extends through the battery and a radiator; a heat exchanger that is connected to the circulation passage in parallel with the radiator and that performs heat exchange between the cooling water and hydraulic oil; a first switching valve that switches whether or not to supply the hydraulic oil that has been delivered from the hydraulic pump to the heat exchanger; and a second switching valve that switches whether to supply the cooling water that has passed through the battery to the radiator or to the heat exchanger.

According to the above configuration, when the hydraulic oil that has been delivered from the hydraulic pump is supplied to the heat exchanger by the first switching valve, and the cooling water that has passed through the battery is supplied to the heat exchanger by the second switching valve, the cooling water that circulates in a manner to flow through the battery is heated by the hydraulic oil. Therefore, the temperature of the battery can be increased.

As a second mode, in the first mode, the above hydraulic system may further include: a relief valve located between the hydraulic pump and the first switching valve; and an oil cooler that cools the hydraulic oil that has passed through the relief valve. The first switching valve may switch whether to supply the hydraulic oil that has passed through the relief valve to the heat exchanger or to the oil cooler. According to this configuration, when the hydraulic oil passes through the relief valve, the temperature of the hydraulic oil can be increased. In addition, if heating of the cooling water is unnecessary, the hydraulic oil that has passed through the relief valve can be cooled by the oil cooler.

As a third mode, in the second mode, for example, the above hydraulic system may further include: a hydraulic oil tank connected to the hydraulic pump; and a control valve structure connected to the hydraulic pump and to hydraulic actuators.

As a fourth mode, in the third mode, the oil cooler may cool the hydraulic oil that is discharged from the hydraulic actuators through the control valve structure. According to this configuration, not only the hydraulic oil that has passed through the relief valve, but also the hydraulic oil that is discharged from the hydraulic actuators can be cooled.

As a fifth mode, in the third or fourth mode, the construction machine may include a hydraulic excavator including: a slewing structure; a boom that is luffed relative to the slewing structure; and a driver's seat that is included in the slewing structure and that is located laterally to the boom. In the slewing structure: the hydraulic oil tank may be located on an opposite side of the boom from the driver's seat; the battery may be located at a back of the driver's seat and the boom; and the control valve structure may be located between the boom and the battery. The electric motor, the hydraulic pump, the oil cooler, the first switching valve, the heat exchanger, the circulation pump, the radiator, and the second switching valve may be located within a space that is surrounded by a side surface of the slewing structure, the side surface being located on a side of the hydraulic oil tank, the battery, the control valve structure, and the hydraulic oil tank. According to this configuration, the hydraulic oil piping and the cooling water piping can be laid out with short lengths.

## Claims

1. A hydraulic system of a construction machine, the hydraulic system comprising:
an electric motor that is supplied with electric power from a battery;
a hydraulic pump that is driven by the electric motor;
a circulation pump that circulates cooling water through a circulation passage that extends through the battery and a radiator;
a heat exchanger that is connected to the circulation passage in parallel with the radiator and that performs heat exchange between the cooling water and hydraulic oil;
a first switching valve that switches whether or not to supply the hydraulic oil that has been delivered from the hydraulic pump to the heat exchanger; and
a second switching valve that switches whether to supply the cooling water that has passed through the battery to the radiator or to the heat exchanger.

2. The hydraulic system of a construction machine according to claim 1, further comprising:
a relief valve located between the hydraulic pump and the first switching valve; and
an oil cooler that cools the hydraulic oil that has passed through the relief valve, wherein
the first switching valve switches whether to supply the hydraulic oil that has passed through the relief valve to the heat exchanger or to the oil cooler.

3. The hydraulic system of a construction machine according to claim 2, further comprising:
a hydraulic oil tank connected to the hydraulic pump; and
a control valve structure connected to the hydraulic pump and to hydraulic actuators.

4. The hydraulic system of a construction machine according to claim 3, wherein
the oil cooler cools the hydraulic oil that is discharged from the hydraulic actuators through the control valve structure.

5. The hydraulic system of a construction machine according to claim 3 or 4, wherein
the construction machine includes a hydraulic excavator including:
a slewing structure;
a boom that is luffed relative to the slewing structure; and
a driver's seat that is included in the slewing structure and that is located laterally to the boom,
in the slewing structure:
the hydraulic oil tank is located on an opposite side of the boom from the driver's seat;
the battery is located at a back of the driver's seat and the boom; and
the control valve structure is located between the boom and the battery, and
the electric motor, the hydraulic pump, the oil cooler, the first switching valve, the heat exchanger, the circulation pump, the radiator, and the second switching valve are located within a space that is surrounded by a side surface of the slewing structure, the side surface being located on a side of the hydraulic oil tank, the battery, the control valve structure, and the hydraulic oil tank.
